# EUROPÄISCHE PATENTSCHRIFT

(11) **EP 1 063 266 B1**
(45) Veröffentlichungstag und Bekanntmachung des Hinweises auf die Patenterteilung: **27.10.2004**
(21) Anmeldenummer: 00112552.5
(22) Anmeldetag: 14.06.2000
(51) Int. Cl.: C09D 4/06, C08F 265/04, C09D 4/00, C08F 222/10, C08F 2/44, C09D 5/34

(54) **Herstellung und Verwendung von Kaltplastik-Überzugsmassen auf Basis von Acrylatharzen**
Preparation and use of cold plastics coating based on acrylic resins
Préparation et utilisation de matières de recouvrement plastiques à froid, basées sur des résines acryliques

(30) Priorität: 23.06.1999 DE 19928436
(43) Veröffentlichungstag der Anmeldung: 27.12.2000
(73) Patentinhaber: Surface Specialties Austria GmbH, 8402 Werndorf (AT)
(72) Erfinder: Kriessmann, Ingo, Dr., 8010 Graz (AT); Klintschar, Gerfried, Dr., 8010 Graz (AT); Epple, Ulrich, Dr., 8042 Graz (AT); Labenbacher, Adorf, 8042 Graz (AT)
(74) Vertreter: Deckers, Hellmuth, Dr.

(56) Entgegenhaltungen:
- EP-A- 0 052 190
- US-A- 4 076 671
- US-A- 4 797 432

## Beschreibung

Die Erfindung betrifft lösungsmittelfreie bzw. lösungsmittelarme Zwei-Komponenten-Bindemittel insbesondere für Straßenmarkierungsfarben.

Derzeit werden Straßenmarkierungen vorwiegend mit Spritzfarben auf Basis von synthetischem Kautschuk und/oder Kunstharzen ausgeführt. Diese Einkomponenten-Farben werden mit Spritzaggregaten in einer Schichtdicke von ca. 0,4 mm auf die Straßenoberfläche aufgetragen. Sie haben eine typische Lebensdauer infolge des Abriebs von ca. einem Jahr.

Es wurde nach Wegen gesucht, die Lebensdauer der Markierung zu verlängern. Eine Erhöhung der Lebendauer ist im Wesentlichen nur durch eine Erhöhung der Schichtdicke erreichbar.

Eine Entwicklung war die der thermoplastischen Farbmassen, die bei ca. 150 bis 180 °C aufgetragen oder gespritzt werden, der sogenannten Heißplastiken. Damit lassen sich Markierungen in Schichtdicken bis zu ca. 3 mm aufbringen, die nach dem Abkühlen auch sofort überfahrbar sind. Der Nachteil ist, daß diese Schichten bei tiefer Temperatur zu Versprödung und zum Abplatzen von der Fahrbahnoberfläche neigen. An den Kanten der Markierungen bilden sich häufig Wasserlachen, die zu Aquaplaning-Gefahr beitragen.

Günstiger verhalten sich die sogenannten Kaltplastiken, das sind in olefinisch ungesättigten Monomeren gelöste Polymere, meist auf Basis von Acryl- oder Methacryl-Harzen oder ungesättigten Polyestern, denen Füllstoffe zugesetzt werden.

Es ergibt sich eine pastenartige Masse, die auf die Straßenoberfläche aufgetragen wird. Unmittelbar vor der Applikation wird ein Härter zugemischt, der die (radikalische) Polymerisation der Monomeren auslöst.

Es wurde nun gefunden, daß sich der Verlauf und damit die Oberflächengleichmäßigkeit von Kaltplastik-Material deutlich verbessern läßt, wenn das in dem Monomeren bzw. der Monomer-Mischung gelöste (Meth)Acrylat-Copolymer Bausteine enthält, die sich aus der Reaktion von cyclischen niedermolekularen Verbindungen ausgewählt aus Monoepoxiden, Lactonen und Lactamen mit Säuregruppen-haltigen Vinylmonomeren vor, während oder nach der Polymerisation zum (Meth)Acryl-Copolymeren bilden. Bei ansonsten gleicher Zusammensetzung wird durch den Zusatz dieser speziellen Ausgangsprodukte auch die Viskosität der Farbmassen erheblich niedriger; dadurch läßt sich die Masse leichter und effizienter homogenisieren.

Gegenstand der Erfindung sind daher Bindemittel für Straßenmarkierungsfarben, enthaltend ein (Meth)Acrylatcopolymer **A** und ein oder mehrere olefinisch ungesättigte Monomere **B**, die durch Zusatz von Radikalinitiatoren **C** härtbar sind. Weiterer Gegenstand der Erfindung sind Straßenmarkierungsfarben, die die erfindungsgemäßen Bindemittel und übliche Zusätze wie Farbpigmente, Füllstoffe, andere Additive, Haftungsverbesserer und reflektierende Zusatzstoffe enthalten.

Die Verarbeitung der neuen Bindemittel erfolgt üblicherweise in Form einer hoch gefüllten Masse. Darunter werden hier solche Massen verstanden, bei denen der Massenanteil an Füllstoffen mindestens 30 % beträgt. Bevorzugt ist das Massenverhältnis zwischen der Mischung aus Polymer **A** und Monomeren **B** zu dem Füllstoff im Bereich von 1:1 bis 1:6.

Die Bindemittel enthalten Massenanteile von 20 bis 80 %, bevorzugt 25 bis 75, und insbesondere 30 bis 70 % des (Meth)Acrylatcopolymeren **A** und 80 bis 20 %, bevorzugt 75 bis 25 %, insbesondere 70 bis 30 % der olefinisch ungesättigten Monomeren **B**.

Die (Meth)Acrylatcopolymeren **A** sind erhältlich durch Umsetzung von Massenanteilen von
- 10 bis 50 %, bevorzugt 15 bis 40 %, insbesondere 17 bis 35 % von Verbindungen **A1** ausgewählt aus Monoepoxiden, Lactonen und Lactamen mit 4 bis 18 Kohlenstoffatomen, bevorzugt Glycidylestern und Glycidyläthern von aliphatischen, in alpha-Stellung verzweigten Monocarbonsäuren mit 4 bis 12 Kohlenstoffatomen bzw. aliphatischen Alkoholen mit 4 bis 13 Kohlenstoffatomen, Lactonen und Lactamen mit 5 bis 12 Kohlenstoffatomen, und
- 1 bis 25 %, bevorzugt 3 bis 20 %, insbesondere 5 bis 18 % von olefinisch ungesättigten Monomeren **A2**, die mindestens eine Säuregruppe ausgewählt aus Carboxylgruppen, Sulfonsäuregruppen und Phosphonsäuregruppen enthalten,
- 5 bis 70 %, bevorzugt 8 bis 60, insbesondere 10 bis 55 %, von Estern **A3** der Methacrylsäure mit linearen, verzweigten oder cyclischen aliphatischen Alkoholen mit 1 bis 20, bevorzugt 1 bis 10 Kohlenstoffatomen, und
- 2 bis 84 %, bevorzugt 5 bis 75, insbesondere 7 bis 65 %, von Estern **A4** der Acrylsäure mit linearen, verzweigten oder cyclischen aliphatischen Alkoholen mit 2 bis 20, bevorzugt 4 bis 10 Kohlenstoffatomen, sowie gegebenenfalls
- bis zu 70 % von anderen Vinylmonomeren **A5**
unter radikalischer Polymerisation, wobei die Verbindungen **A1** vorgelegt werden und die Monomeren **A2** bis **A5** sowie ein radikalischer Initiator **A7** zugegeben werden. Gegebenenfalls kann zusätzlich ein Massenanteil von bis zu 10 % eines Lösungsmittels **A6** der Komponente **A1** oder den Monomeren **A2** bis **A5** zugefügt werden; es ist jedoch bevorzugt, in Abwesenheit eines Lösungsmittels zu arbeiten. Die Summe der genannten Massenanteile von **A1** bis **A5** ergibt selbstverständlich jeweils 100 %. Die Polymerisation erfolgt üblicherweise bei Temperaturen von 100 bis 220 °C, bevorzugt bei 110 bis 200 °C, insbesondere 120 bis 185 °C.

Dabei sind die Verbindungen **A1** Monoepoxide, cyclische Ester wie Lactone und Carbonate von 1,2- oder 1,3-Diolen, oder Lactame, die durch Reaktion mit den Säuregruppen-haltigen Monomeren **A2** unter Ringöffnung an diese addieren. Dabei entstehen doppelbindungshaltige Verbindungen, die mit den anderen Monomeren copolymerisieren können. Besonders bevorzugt werden epsilon-Caprolacton sowie Monoglycidylester einer technischen Mischung von alpha-Alkyl- und alpha,alpha-Dialkylalkanmonocarbonsäuren mit im Mittel ca. 4 bis 11 Kohlenstoffatomen, die z. B. unter der Bezeichnung ®Cardura E5 oder E10 (Shell Chemie) bzw. Glydexx N10 (Exxon) oder von anderen Herstellern erhältlich sind.

Die Monomeren **A2** sind bevorzugt alpha-beta-ungesättigte Carbonsäuren mit 3 bis 6 Kohlenstoffatomen, wie Acrylsäure, Methacrylsäure, Vinylessigsäure und Crotonsäure, Halbester von olefinisch ungesättigten Dicarbonsäuren mit aliphatischen Alkoholen, insbesondere linearen aliphatischen Alkoholen mit 1 bis 4 Kohlenstoffatomen wie Methanol, Äthanol, iso-Propanol, n-Butanol, wie Maleinsäuremonomethylester oder Itaconsäuremonobutylester. Besonders bevorzugt werden Acryl- und Methacrylsäure sowie Maleinsäuremonomethylester oder deren Mischungen.

Die Monomeren **A3** sind bevorzugt Ester der Methacrylsäure mit aliphatischen Alkoholen mit 1 bis 10 Kohlenstoffatomen in der Alkylgruppe wie Methyl-, Äthyl-, n- und iso-Propyl-, t-Butyl-, iso-Amyl-, Hexyl- und Cyclohexyl-methacrylat. Insbesondere werden Methyl-, Äthyl-, iso-Propyl und tert.-Butylmethacrylat eingesetzt.

Die Monomeren **A4** sind bevorzugt Ester der Acrylsäure mit aliphatischen Alkoholen mit 2 bis 10 Kohlenstoffatomen in der Alkylgruppe wie Äthyl-, n-Propyl-, n-Butyl, 2-Äthylhexyl-, und Decylacrylat. In untergeordnetem Anteil (bis zu 20 % der Masse der Monomeren **A4**) können auch Acrylsäureester von oligomeren oder polymeren Propylenglykolen mit Polymerisationsgraden von 2 bis 20 eingesetzt werden, bei denen die restliche Hydroxylgruppe auch mit niedrigen aliphatischen Alkoholen mit 1 bis 4 Kohlenstoffatomen veräthert sein kann.

Die Monomeren **A5** umfassen Styrol, Vinyltoluol, Vinylversatat, andere Vinylester, Vinyläther, wie Methyl- und Butyl-Vinyläther, (Meth)Acrylnitril, (Meth)Acrylamid.

Als Lösungsmittel **A6** sind geeignet: aromatische Kohlenwasserstoffe oder deren Gemische, insbesondere bestimmte Schnitte bei der Fraktionierung von Rohöl (z. B. "Solvent Naphtha" 150/180 und 180/210), ferner aliphatische Ester wie Äthylacetat, Butylacetat, Acetate mit längeren Alkoholresten, Butylpropionat, Pentylpropionat, Äthylenglykolmonoäthylätheracetat, das entsprechende Methylätheracetat oder Methoxypropylacetat, Äther, wie Äthylenglykolacetatmonoäthyl-, -methyl- oder - butyläther, Ketone, wie Methylamylketon, Methylisobutylketon, Glykole, Alkohole wie Isopropanol oder Butanol, Lactone oder Gemische derartiger Lösemittel, die alle unter den Bedingungen der radikalischen Polymerisation inert sind. Es ist jedoch bevorzugt, kein Lösungsmittel zu verwenden.

Die radikalischen Initiatoren **A7** sind bevorzugt ausgewählt aus den organischen Persäuren und Hydroperoxiden, ferner Perestern, Peroxodicarbonaten und Perketalen, Dialkyl- und Diacylperoxiden, Ketonperoxiden und aliphatischen Azoverbindungen. Sie kommen einzeln oder im Gemisch zum Einsatz.

Das Polymer **A** wird anschließend in weiteren olefinisch ungesättigten Monomeren oder einer Mischung von mehreren solcher Monomeren **B** gelöst, wobei die Lösung einen Massenanteil von ca. 25 bis ca. 60 % des Polymeren **A** und ca. 75 bis ca. 40 % des Monomeren bzw. der Monomermischung **B** enthält.

Dabei enthält die Monomermischung **B** mindestens ein einfach olefinisch ungesättigtes Monomer **B1** und mindestens ein zwei- oder mehrfach olefinisch ungesättigtes Monomer **B2**, sowie gegebenenfalls mindestens einen Inhibitor **B3**, der die Bildung von Radikalen unterdrückt, oder einen Beschleuniger **B4**.

Die Monomeren **B1** sind zu einem Massenanteil von 80 bis 99,5 % in der Mischung **B** enthalten und umfassen die unter **A3** und **A4** genannten Ester. Bevorzugt sind Mischungen von Methylmethacrylat und n-Butylacrylat in einem Massenverhältnis von 90:10 bis 40:60.

Die zwei- oder mehrfach olefinisch ungesättigten Monomeren **B2** sind bevorzugt Ester von olefinisch ungesättigten Carbonsäuren mit zwei- oder mehrwertigen Alkoholen mit 2 bis 12, insbesondere 2 bis 10 Kohlenstoffatomen. Dabei beträgt der Massenanteil von **B2** in **B** bevorzugt 0,5 bis 20 %. Als besonders bevorzugt werden Äthylen- und Butylenglykoldi(meth)acrylat, Neopentylglykoldi(meth)acrylat, Hexandioldi(meth)acrylat, Glycerintri(meth)acrylat, Trimethylolpropantri(meth)acrylatund Pentaerythrittetra(meth)acrylat genannt.

Die Inhibitoren **B3** sind bevorzugt ein- oder mehrwertige Phenole wie Hydrochinon, Hydrochinonmonomethyläther, 2,6-Di-tert.-butyl-4-methylphenol (BHT) oder Chinone wie p-Benzochinon oder 1,4-Naphthochinon, wobei diese auch mit Sauerstoff aktiviert sein können.

Die Beschleuniger **B4** sind die aus der Technologie der ungesättigten Polyester bekannten. Hierzu zählen vor allem N,N-Dimethylanilin, N,N-Dimethyl-p-toluidin, äthoxyliertes p-Toluidin und Kobalt-2-äthylhexanoat ("Kobaltoctoat").

Die Erfindung betrifft auch ein Verfahren zur Herstellung eines Bindemittels für Straßenmarkierungsfarben, dadurch gekennzeichnet, daß in einem ersten Schritt ein Polymer **A** erzeugt wird durch radikalisch initiierte Copolymerisation einer Mischung enthaltend Massenanteile von
- 10 bis 50 % von Verbindungen **A1** ausgewählt aus Monoepoxiden, Lactonen und Lactamen mit 4 bis 18 Kohlenstoffatomen, und
- 1 bis 25 % von olefinisch ungesättigten Monomeren **A2**, die mindestens eine Säuregruppe ausgewählt aus Carboxylgruppen, Sulfonsäuregruppen und Phosphonsäuregruppen enthalten,
- 5 bis 70 %, von Estern **A3** der Methacrylsäure mit linearen, verzweigten oder cyclischen Alkoholen mit 1 bis 20 Kohlenstoffatomen, und
- 2 bis 84 %, von Estern **A4** der Acrylsäure mit linearen, verzweigten oder cyclischen Alkoholen mit 2 bis 20 Kohlenstoffatomen,
und anschließend dieses Polymer **A** in einer Monomerenmischung **B** gelöst wird, die mindestens ein einfach olefinisch ungesättigtes Monomere **B1** und mindestens ein zwei- oder mehrfach olefinisch ungesättigtes Monomere **B2** enthält.

Zur Applikation wird die Lösung von **A** in **B** zusätzlich mit Pigmenten und Füllstoffen sowie weiteren Zusätzen vermischt, wobei auf 100 g der Lösung von **A** in **B** ca. 100 bis 500 g der genannten Zuschlagstoffe kommen.

Als Farbpigmente und Füllstoffe werden insbesondere Titandioxid-Pigmente, Kreiden, Calcite, Dolomit, Diatomeenerden (Kieselgur), Glimmer, Zinkoxid und Magnesiumsilicate eingesetzt; gegebenenfalls werden noch farbgebende, bevorzugt anorganische Pigmente wie z. B. gelbe und rote Eisenoxid-Pigmente eingesetzt. Zur Verbesserung der Griffigkeit der Markierung wird Quarzsand (z. B. Cristobalit) zugesetzt; der Erhöhung der Sichtbarkeit insbesondere bei Dunkelheit dient der Zusatz von feinen Glasperlen, mit typischen Durchmessern von ca. 20 bis ca. 200 µm.

Zum Abbinden der Masse wird ein Radikalinitiator **C** unmittelbar vor der Applikation zugefügt und intensiv eingemischt. Hierfür eignen sich besonders Peroxid-Initiatoren wie Dibenzoylperoxid oder organische Persäuren, die bereits bei niedrigen Temperaturen in Radikale zerfallen. Gegebenenfalls werden auch Mischungen von Radikalbildnern und Beschleunigern eingesetzt. Die Menge des Initiators muß ausreichen, um die zur Stabilisierung und zur Verhinderung unerwünschter vorzeitiger Polymerisation zugesetzten Stabilisatoren (Radikalfänger) zu "überfahren", d. h. ein Teil des jetzt zugesetzten Initiators verbraucht den Stabilisator, so daß die Polymerisation, und damit der Härtungsprozeß eingeleitet werden kann. Dabei wird die Menge von Stabilisator, Beschleuniger und Radikalinitiator so gewählt, daß einerseits die Bindemittel eine ausreichend lange Lagerstabilität von mehreren Monaten haben; andererseits die zuzusetzende Initiatormenge zur Auslösung der Härtung nicht zu groß wird.

Die Erfindung wird durch die nachfolgenden Beispiele erläutert, wobei sie jedoch hierdurch nicht beschränkt werden soll.

### Beispiel 1

In einen Rührkessel wurden 19,64 kg ®Cardura E 10 (Glycidylester der Neodecansäure) vorgelegt. Nach Erwärmen auf ca. 145 °C wurde während 4 Stunden eine Mischung von 6,28 kg Acrylsäure, 51,42 kg Methylmethacrylat, 22,42 kg Butylacrylat und 2,35 kg tert.-Butylperoctoat zugegeben, danach wurde 1,5 Stunden bei dieser Temperatur gehalten. Anschließend wurde die Reaktionsmischung abgekühlt. Bei 100 °C wurde eine Mischung von 92 kg Methylmethacrylat, 63,5 kg Butylacrylat, 2 kg Butandioldimethacrylat und 26 g 1,4-Naphthochinon zugesetzt. Nach weiterem Abkühlen auf ca. 50 °C wurden 1,96 kg Dimethyl-p-toluidin und 610 g Paraffin mit einem Schmelzbereich von ca. 52 bis ca. 54 °C eingerührt. Die erhaltene Masse wurde als Kaltplastik 1 bezeichnet.

### Beispiel 2 und 3

Nach der Verfahrensweise des Beispiels 1 wurden die Kaltplastiken 2 und 3 hergestellt, wobei 19,7 (29,46) kg ®Cardura E 10 (Glycidylester der Neodecansäure) vorgelegt wurden. Nach Erwärmen auf ca. 145 °C wurde während 4 Stunden eine Mischung von 6,3 (9,42) kg Acrylsäure, 11,4 (51,42) kg Methylmethacrylat, 62,4 (9,46) kg Butylacrylat und 2,3 (2,35) kg tert.-Butylperoctoat zugegeben, danach wurde eine weitere Stunde bei dieser Temperatur gehalten. Anschließend wurde die Reaktionsmischung abgekühlt. Bei 100 °C wurde eine Mischung von 132 (92) kg Methylmethacrylat, 23,5 (63,5) kg Butylacrylat, 2 (2) kg Butandioldimethacrylat und 26 (26) g 1,4-Naphthochinon zugesetzt. Nach weiterem Abkühlen auf ca. 50 °C wurden 1,96 (1,96) kg Dimethyl-p-toluidin und 610 (610) g Paraffin mit einem Schmelzbereich von ca. 52 bis ca. 54 °C eingerührt. Die erhaltene Masse wurde als Kaltplastik 2 (3) bezeichnet.

### Beispiel 4 (Vergleich)

In einen Rührkessel wurden 46 kg Methoxypropylacetat vorgelegt, und bei ca. 140 °C während 4 Stunden eine Mischung von 1 kg Acrylsäure, 63,7 kg Methylmethacrylat, 34,06 kg Butylacrylat und 2,8 kg tert.-Butylperoctoat zugegeben, und die Mischung zwei weitere Stunden bei dieser Temperatur gehalten. Anschließend wurde das Methoxypropylacetat vollständig abdestilliert, und die Reaktionsmischung abgekühlt. Bei 100 °C wurde eine Mischung von 92 kg Methylmethacrylat, 63,5 kg Butylacrylat, 2 kg Butandioldimethacrylat und 26 g 1,4-Naphthochinon zugesetzt. Nach weiterem Abkühlen auf ca. 50 °C wurden 1,96 kg Dimethyl-p-toluidin und 610 g Paraffin mit einem Schmelzbereich von ca. 52 bis ca. 54 °C eingerührt. Die erhaltene Masse wurde als Kaltplastik 4 bezeichnet.

Die molaren Massen der in den Beispielen 1 bis 4 erhaltenen Acrylatharze lagen im selben Bereich.

### Formulierung der Straßenmarkierungsfarben

Aus jeweils 100 kg der Kaltplastik-Materialien 2, 3 und 4 (Vergleich) wurden Straßenmarkierungsfarbmassen hergestellt durch Zusatz von jeweils 50 kg eines Titandioxid-Weißpigments (®Kronos 2220, Kronos Titan-GmbH), 50 kg eines gemahlenen Calcits (mittlerer Teilchendurchmesser 5 µm, ®Calcidar 5), 25 kg eines Silikat-Pigments (®Zeolex 323, Krahn Chemie GmbH), 100 kg eines Quarzsandes mit einer Korngröße von 0,1 bis 1 mm und einer Schüttdichte von ca. 1100 kg/m³ (Cristobalits and M72, Quarzwerke GmbH) sowie 150 kg Glasperlen mit einem Durchmesser von ca. 40 bis ca. 70 µm.

Unmittelbar vor der Applikation wurde auf 100 kg der Farbmasse 1,2 kg Dibenzoylperoxidpulver (BP-50 FT der Peroxid Chemie) zugesetzt und intensiv untergemischt.

### Beispiel 5 (Vergleich - Polyester)

5,43 kg eines ungesättigten Polyesterharzes auf Basis von Propylenglykol, Phthalsäureanhydrid und Maleinsäureanhydrid, 8,14 kg Methylmethacrylat, 2,87 kg n-Butylacrylat und 1,64 kg Hexandioldiacrylat wurden bei ca. 30 °C vermischt; in einem Dissolver wurde eine separat hergestellte Mischung von 1,81 kg Dibutylphthalat, 1,1 kg N,N-Dimethyl-p-toluidin, 3,6 kg Kobaltoctoat-Lösung (1 g Co-Octoat in 100 g Lösung, Lösungsmittel ist ein Gemisch aus gleichen Massenanteilen Benzin und Xylol), 900 g eines Paraffins mit einem Schmelzbereich von ca. 52 bis ca. 54 °C, 18,1 kg eines Titandioxidpigmentes, 5,43 kg Kieselgur, 9,05 kg Quarzmehl mit einer mittleren Teilchengröße von ca. 60 µm, 27,07 kg feinteilige Kreide (mittlere Teilchengröße 15 µm) und 19,91 kg grobteilige Kreide (mittlere Teilchengröße 500 µm) während ca. 20 Minuten dazugemischt. Zu 1 kg dieser Farbmasse wurden unmittelbar vor der Verarbeitung 7 g Dibenzoylperoxid zugemischt.

### Beispiel 6 (Anwendungstechnische Prüfung)

Die Farbmasse aus dem Beispiel 4 wurde vergleichend mituntersucht. Dazu wurde in einem Brookfield-Viskosimeter mit der Spindel 4 die Viskosität der Masse bei 23°C bestimmt.

Die Verarbeitungszeit wurde bestimmt, indem nach dem Zumischen des Radikalinitiators die Zeit gemessen wurde, in der die Viskosität (bestimmt wie oben) auf das doppelte angestiegen war.

Die Klebfrei-Zeit wurde bestimmt, indem 40 g der mit dem Radikalinitiator vermischten Masse auf einen glatten Karton ausgegossen wurden. In regelmäßigen Zeit-Intervallen wurde die Klebrigkeit durch leichtes Auflegen der gereinigten Fingerkuppe geprüft. Es wurde die Zeit angegeben, bei der kein Kleben mehr feststellbar war.

Der Verlauf wurde bestimmt, indem 100 g der Farbmasse bei 23 °C mit dem Radikalinitiator vermischt wurden. 40 g dieser Mischung wurden so auf einen glatten Karton ausgegossen, daß ein annähernd kreisförmiger Gießling entstand. Nach der Aushärtung wurde der mittlere Durchmesser des gehärteten Gießlings bestimmt.

Die folgenden Werte wurden erhalten:

| Bindemittel aus Beispiel | | 2 | 3 | 4 (Vergleich Acrylharz) |
|---|---|---|---|---|
| Massenverhältnis Bindemittel/Füllstoffe* | | 1: 3,75 | 1: 3,75 | 1: 3,75 |
| Viskosität | in mPa·s | 30 700 | 40 800 | 86 000 |
| Verarbeitungszeit | in min | 8 | 7 | 6 |
| Klebfreizeit | in min | 32 | 30 | 29 |
| Verlauf | in cm | 9,2 | 8,9 | 6,9 |

| | | | | |
|---|---|---|---|---|
| * Unter der Masse der Füllstoffe wird hier die Summe der Massen von Pigmenten und Füllstoffen verstanden, als Masse des Bindemittels wird die Summe der Massen der Komponenten **A** und **B** verstanden. | | | | |

### Ergebnis:

Die Viskositäten der Farbmassen aus den Bindemitteln 2 und 3 liegen erheblich niedriger als die der Farbmasse mit Bindemittel 4. In anwendungstechnischer Sicht zeigt sich dies an dem besseren Verlauf der Farbmasse, bei gleichem Massenverhältnis zwischen Bindemitteln und Füllstoffen/Pigmenten. Eine derartige Verbesserung war durch den Zusatz der Verbindungen gemäß **A1** nicht zu erwarten gewesen.

### Vergleich zur Polyestermasse:

Während die auf Polyester basierende Masse (Bindemittel aus Beispiel 5) bei gleich gutem Verlauf eine gelbliche Verfärbung zeigte, waren die Massen mit den Bindemitteln aus Beispielen 2, 3 und 4 rein weiß.

## Patentansprüche

1. Bindemittel für Straßenmarkierungsfarben, enthaltend ein (Meth)Acrylatcopolymer **A** und ein oder mehrere olefinisch ungesättigte Monomere **B**, die durch den Zusatz von Radikalinitiatoren **C** härtbar sind, **dadurch gekennzeichnet, daß** die Bindemittel Massenanteile von 20 bis 80 % des (Meth)Acrylatcopolymeren **A** und 80 bis 20 % der olefinisch ungesättigten Monomeren **B** enthalten, wobei die (Meth)Acrylatcopolymeren **A** erhältlich sind durch Umsetzung von Massenanteilen von
- 10 bis 50 % von Verbindungen **A1** ausgewählt aus Monoepoxiden, Lactonen und Lactamen mit 4 bis 18 Kohlenstoffatomen, und
- 1 bis 25 % von olefinisch ungesättigten Monomeren **A2**, die mindestens eine Säuregruppe ausgewählt aus Carboxylgruppen, Sulfonsäuregruppen und Phosphonsäuregruppen enthalten,
- 5 bis 70 %, von Estern **A3** der Methacrylsäure mit linearen, verzweigten oder cyclischen Alkoholen mit 1 bis 20 Kohlenstoffatomen, und
- 2 bis 84 %, von Estern **A4** der Acrylsäure mit linearen, verzweigten oder cyclischen Alkoholen mit 2 bis 20 Kohlenstoffatomen, sowie gegebenenfalls
- bis zu 70 % von anderen Vinylmonomeren **A5**
unter radikalischer Polymerisation, wobei die Verbindungen **A1** vorgelegt werden und die Monomeren **A2** bis **A5** sowie ein radikalischer Initiator **A7** zugegeben werden.

2. Bindemittel nach Anspruch 1, **dadurch gekennzeichnet, daß** als Verbindungen **A1** Glycidylester von in alpha-Stellung verzweigten aliphatischen Monocarbonsäuren eingesetzt werden, wobei die Monocarbonsäure 4 bis 12 Kohlenstoffatome aufweist.

3. Bindemittel nach Anspruch 1, **dadurch gekennzeichnet, daß** als Verbindungen **A2** Acrylsäure, Methacrylsäure oder deren Mischungen eingesetzt werden.

4. Bindemittel nach Anspruch 1, **dadurch gekennzeichnet, daß** als Verbindungen **A3** Ester der Methacrylsäure mit aliphatischen Alkoholen mit 1 bis 10 Kohlenstoffatomen in der Alkylgruppe eingesetzt werden.

5. Bindemittel nach Anspruch 1, **dadurch gekennzeichnet, daß** als Verbindungen **A4** Ester der Acrylsäure mit aliphatischen Alkoholen mit 2 bis 10 Kohlenstoffatomen in der Alkylgruppe eingesetzt werden.

6. Bindemittel nach Anspruch 1, **dadurch gekennzeichnet, daß** als Verbindungen **A5** mindestens eine Verbindung ausgewählt aus Styrol, Vinyltoluol, Vinylversatat, Methylvinyläther und Butylvinyläther eingesetzt wird.

7. Bindemittel nach Anspruch 1, **dadurch gekennzeichnet, daß** die Monomerenmischung **B** eine Mischung von Methylmethacrylat und n-Butylacrylat in einem Massenverhältnis von 90:10 bis 40:60 enthält.

8. Bindemittel nach Anspruch 1, **dadurch gekennzeichnet, daß** die Monomerenmischung **B** einen Massenanteil von 0,5 bis 20 % eines zwei- oder mehrfach ungesättigten copolymerisierbaren Monomeren enthält, ausgewählt aus Butandioldi(meth)acrylat, Hexandioldi(meth)acrylat, Glycerintri(meth)acrylat und Trimethylolpropantri(meth)acrylat.

9. Verfahren zur Herstellung eines Bindemittels für Straßenmarkierungsfarben, **dadurch gekennzeichnet, daß** in einem ersten Schritt ein Polymer **A** erzeugt wird durch radikalisch initiierte Copolymerisation einer Mischung enthaltend Massenanteile von
- 10 bis 50 % von Verbindungen **A1** ausgewählt aus Monoepoxiden, Lactonen und Lactamen mit 4 bis 18 Kohlenstoffatomen, und
- 1 bis 25 % von olefinisch ungesättigten Monomeren **A2**, die mindestens eine Säuregruppe ausgewählt aus Carboxylgruppen, Sulfonsäuregruppen und Phosphonsäuregruppen enthalten,
- 5 bis 70 %, von Estern **A3** der Methacrylsäure mit linearen, verzweigten oder cyclischen Alkoholen mit 1 bis 20 Kohlenstoffatomen, und
- 2 bis 84 %, von Estern **A4** der Acrylsäure mit linearen, verzweigten oder cyclischen Alkoholen mit 2 bis 20 Kohlenstoffatomen,
und anschließend dieses Polymer **A** in einer Monomerenmischung **B** gelöst wird, die mindestens ein einfach olefinisch ungesättigtes Monomere **B1** und mindestens ein zwei- oder mehrfach olefinisch ungesättigtes Monomere **B2** enthält.

10. Straßenmarkierungsfarbe, enthaltend ein Bindemittel nach Anspruch 1, eine Pigment- bzw. Füllstoff-Mischung und einen Radikalinitiator **C**.

## Claims

1. A binder for road-marking paints, comprising a (meth)acrylate copolymer **A** and one or more olefinically unsaturated monomers **B** which can be cured by adding free-radical initiators **C**, wherein the binder has mass fractions of from 20 to 80% of the (meth)acrylate copolymer **A** and from 80 to 20% of the olefinically unsaturated monomers **B**, where the (meth)acrylate copolymers **A** are obtainable by reacting mass fractions,
- from 10 to 50% of compounds **A1** selected from the class consisting of monoepoxides, lactones and lactams having from 4 to 18 carbon atoms,
- from 1 to 25% of olefinically unsaturated monomers **A2** which contain at least one acid group selected from the class consisting of carboxyl groups, sulfonic acid groups and phosphonic acid groups,
- from 5 to 70% of methacrylates **A3** of linear, branched or cyclic alcohols having from 1 to 20 carbon atoms,
- from 2 to 84% of acrylates **A4** of linear, branched or cyclic alcohols having from 2 to 20 carbon atoms, and also, if desired,
- up to 70% of other vinyl monomers **A5**
by free-radical polymerization, where the compounds **A1** are first charged and the monomers **A2** to **A5**, and also a free-radical initiator **A7**, are added.

2. A binder as claimed in claim 1, wherein the compounds **A1** used comprise glycidyl esters of α-branched aliphatic monocarboxylic acids, where the monocarboxylic acid has from 4 to 12 carbon atoms.

3. A binder as claimed in Claim 1, wherein the compounds **A2** used comprise acrylic acid, methacrylic acid or mixtures of these.

4. A binder as claimed in Claim 1, wherein the compounds **A3** used comprise methacrylates of aliphatic alcohols having from 1 to 10 carbon atoms in the alkyl group.

5. A binder as claimed in Claim 1, wherein the compounds **A4** used comprise acrylates of aliphatic alcohols having from 2 to 10 carbon atoms in the alkyl group.

6. A binder as claimed in Claim 1, wherein the compounds **A5** used are at least one compound selected from the class consisting of styrene, vinyltoluene, vinyl versatate, methyl vinyl ether and butyl vinyl ether.

7. A binder as claimed in Claim 1, wherein the monomer mixture **B** comprises a mixture of methyl methacrylate and n-butyl acrylate in a weight ratio of from 90:10 to 40:60.

8. A binder as claimed in Claim 1, wherein the monomer mixture **B** comprises a mass fraction of from 0.5 to 20% of a di- or poly-unsaturated copolymerizable monomer selected from the class consisting of butanediol di(meth)acrylate, hexanediol di(meth)acrylate, glycerol tri(meth)acrylate and trimethylolpropane tri(meth)acrylate.

9. A process for preparing a binder for road-marking paints, which comprises, in a first step, producing a polymer **A** by free-radical-initiated copolymerization of a mixture comprising mass fractions of
- from 10 to 50% of compounds **A1** selected from the class consisting of monoepoxides, lactones and lactams having from 4 to 18 carbon atoms,
- from 1 to 25% of olefinically unsaturated monomers **A2** which contain at least one acid group selected from the class consisting of carboxyl groups, sulfonic acid groups and phosphonic acid groups,
- from 5 to 70% of methacrylates **A3** of linear, branched or cyclic alcohols having from 1 to 20 carbon atoms,
- from 2 to 84% of acrylates **A4** of linear, branched or cyclic alcohols having from 2 to 20 carbon atoms,
and then dissolving this polymer **A** in a monomer mixture **B** which comprises at least one olefinically mono-unsaturated monomer **B1** and at least olefinically di- or poly-unsaturated monomer **B2**.

10. A road-marking paint comprising a binder as claimed in Claim 1, a pigment mixture or, respectively, a filler mixture and a free-radical initiator **C**.

## Revendications

1. Liants pour peintures de marquage routier, contenant un copolymère de (méth)acrylate A et un ou plusieurs monomères B à insaturation oléfinique, qui peuvent durcir par addition d'amorceurs radicalaires C, **caractérisés en ce que** les liants contiennent des proportions en masse de 20 à 80 % du copolymère de (méth)acrylate A et de 80 à 20 % du monomère B à insaturation oléfinique, les polymères de (méth)acrylate A pouvant être obtenus par réaction, les proportions étant en masse
- de 10 à 50 % de composés A1 choisis parmi les monoépoxydes, les lactones et les lactames ayant de 4 à 18 atomes de carbone, et
- de 1 à 25 % de monomères A2 à insaturation oléfinique, qui contiennent au moins un groupe acide choisi parmi les groupes carboxyle, les groupes acide sulfonique et les groupes acide phosphonique,
- de 5 à 70 % d'esters A3 de l'acide méthacrylique avec des alcools cycliques ou à chaîne droite ou ramifiée ayant 1 à 20 atomes de carbone, et
- de 2 à 84 % d'esters A4 de l'acide acrylique avec des alcools cycliques ou à chaîne droite ou ramifiée ayant 2 à 20 atomes de carbone, et éventuellement
- jusqu'à 70 % d'autres monomères vinyliques A5,
dans le cadre d'une polymérisation radicalaire, dans laquelle les composés A1 sont mis en place, et on leur ajoute les monomères A2 à A5, ainsi qu'un amorceur radicalaire A7.

2. Liants selon la revendication 1, **caractérisés en ce qu'**on utilise en tant que composés A1 des esters glycidyliques d'acides monocarboxyliques aliphatiques ramifiés en position alpha, l'acide monocarboxylique contenant de 4 à 12 atomes de carbone.

3. Liants selon la revendication 1, **caractérisés en ce qu'**on utilise en tant que composés A2 l'acide acrylique, l'acide méthacrylique ou des mélanges de ceux-ci.

4. Liants selon la revendication 1, **caractérisés en ce qu'**on utilise en tant que composés A3 des esters de l'acide méthacrylique avec des alcools aliphatiques ayant dans le groupe alkyle 1 à 10 atomes de carbone.

5. Liants selon la revendication 1, **caractérisés en ce qu'**on utilise en tant que composés A4 des esters de l'acide acrylique avec des alcools aliphatiques ayant dans le groupe alkyle 2 à 10 atomes de carbone.

6. Liants selon la revendication 1, **caractérisés en ce qu'**on utilise en tant que composés A5 au moins un composé choisi parmi le styrène, le vinyltoluène, le versatate de vinyle, le méthylvinyléther et le butylvinyléther.

7. Liants selon la revendication 1, **caractérisés en ce que** le mélange de monomères B contient un mélange de méthacrylate de méthyle et d'acrylate de n-butyle selon un rapport en masse de 90:10 à 40:60.

8. Liants selon la revendication 1, **caractérisés en ce que** le mélange de monomères B contient une proportion en masse de 0,5 à 20 % de monomères copolymérisables au moins deux fois insaturés, qui sont choisis parmi le di(méth)acrylate de butanediol, le di(méth)acrylate d'hexanediol, le tri(méth)acrylate de glycérol et le tri(méth)acrylate de triméthylolpropane.

9. Procédé de préparation d'un liant pour peintures de marquage routier, **caractérisé en ce que**, dans une première étape, on produit un polymère A par copolymérisation radicalaire d'un mélange contenant, les proportions étant en masse :
- de 10 à 50 % de composés A1 choisis parmi les monoépoxydes, les lactones et les lactames ayant de 4 à 18 atomes de carbone, et
- de 1 à 25 % de monomères A2 à insaturation oléfinique, qui contiennent au moins un groupe acide choisi parmi les groupes carboxyle, les groupes acide sulfonique et les groupes acide phosphonique,
- de 5 à 70 % d'esters A3 de l'acide méthacrylique avec des alcools cycliques ou à chaîne droite ou ramifiée ayant 1 à 20 atomes de carbone, et
- de 2 à 84 % d'esters A4 de l'acide acrylique avec des alcools cycliques ou à chaîne droite ou ramifiée ayant 2 à 20 atomes de carbone, et éventuellement,
ce polymère A étant ensuite dissous dans un mélange de monomères B qui contient au moins un monomère B1 à mono-insaturation oléfinique et au moins un monomère B2 comportant au moins deux insaturations oléfiniques.

10. Peinture pour marquage routier contenant un liant selon la revendication 1, un mélange de pigments ou de matières de charge, et un amorceur radicalaire C.
